# FASCICULE DE BREVET EUROPEEN

(11) **EP 2 989 221 B1**
(45) Date de publication et mention de la délivrance du brevet: **12.04.2017**
(21) Numéro de dépôt: 14708618.5
(22) Date de dépôt: 11.02.2014
(51) Int. Cl.: C22B 1/244

(54) **PROCÉDÉ DE CHARGEMENT DE MINERAI DE FER EN VRAC TRAITE PARTIELLEMENT PAR DES SUPERABSORBANTS**
VERFAHREN ZUM LADEN VON TEILWEISE MITTELS SUPERABSORBERN BEHANDELTEM LOSEN EISENERZ
METHOD FOR LOADING LOOSE IRON ORE PARTIALLY TREATED BY MEANS OF SUPERABSORBENTS

(30) Priorité: 26.04.2013 FR 1353826
(43) Date de publication de la demande: 02.03.2016
(73) Titulaire: S.P.C.M. SA, 42160 Andrézieux Bouthéon (FR)
(72) Inventeur: PICH, René, F-42000 Saint Etienne (FR); BOEHM, Pascal, F-69530 Brignais (FR); ZAKOSEK, Gilles, F-42000 Saint Etienne (FR)
(74) Mandataire: Cabinet Laurent & Charras
(86) Numéro de dépôt international: PCT/FR2014/050263
(87) Numéro de publication internationale: WO 2014/174165

(56) Documents cités:
- WO-A1-2011/097357
- FR-A1- 2 712 306
- US-A- 5 112 391

## Description

L'invention a pour objet un procédé de chargement dans la cale d'un minéralier, de minerai en vrac traité partiellement par des SAP.

L'invention concerne le transport maritime de minerais, en particulier de minerais de fer. Il est connu que ce type de transport présente un problème de sécurité. En effet, l'eau présente dans le minerai peut entrainer le glissement ou le ripage soudain du minerai dans la cale pouvant conduire à de graves incidents.

Etant donné l'importance des volumes, le minerai de fer est le premier concerné mais d'autres minéraux peuvent présenter la même problématique.

Le déposant a apporté une solution à ce problème dans le brevet FR 2712 306 en proposant d'incorporer un polymère superabsorbant (SAP) dans le minerai au cours du chargement.

L'absorption de l'eau par le polymère conjointement à la diminution de porosité empêchent l'eau résiduelle de migrer vers le fond de cale.

Les tests grandeur nature ont donné les résultats escomptés. Cependant le procédé est peu utilisé à cause du coût et de la mise en oeuvre. Il faut en moyenne 50 à 100 tonnes de superabsorbant pour 100 à 150 000 tonnes de minerai humide à 7 - 9%.

En outre, chaque minerai se comporte différemment en raison de sa granulométrie, sa porosité, du taux d'impuretés et de la méthode de chargement.

En pratique, on ajoute le polymère SAP sur la bande transporteuse qui charge le navire durant tout le chargement pour bloquer l'eau dans la masse.

Des études récentes ont montré que malgré l'addition homogène de SAP dans le minerai, probablement à cause de la vitesse de gonflement du superabsorbant, une partie importante de l'eau migre vers le fond de cale pouvant entraîner des incidents en mer.

Le problème que se propose de résoudre l'invention est donc celui de mettre au point un procédé de traitement de minerai qui soit généralisable à tout type de minerai, qui permette de supprimer la migration d'eau en fond de cale tout en diminuant la consommation de superabsorbant.

Pour résoudre ces problèmes la demanderesse a développé un procédé de chargement de minerai en vrac dans un minéralier, permettant d'améliorer la stabilité du minerai lors du transport en utilisant un polymère superabsorbant (SAP).

Plus précisément, l'invention a pour objet un procédé de chargement dans la cale d'un minéralier de minerai en vrac selon lequel on charge la cale avec, successivement, une partie du minerai traitée avec un polymère superabsorbant (SAP) et une partie du minerai non traitée avec un polymère superabsorbant (SAP).

En pratique, la partie du minerai traitée avec un polymère superabsorbant (SAP) constitue une couche inférieure répartie sur toute la surface du fond de la cale et la partie non traitée du minerai constitue une couche supérieure, avantageusement répartie sur toute la surface de la couche inférieure.

Selon l'invention, les couches inférieure et supérieure peuvent présenter une épaisseur constante ou non. En particulier, comme il sera vu par la suite, les couches ne necessitent pas d'étre planes. Le chargement se fait en effet sous la forme de tas ou de monticules ce qui évite le recours à un chargeur spécifique qu'il faut monter et descendre dans la cale.

Selon une autre caractéristique, on traite le minerai avec des concentrations de SAP variables. En d'autres termes, la couche inférieure du minéralier peut contenir différents mélanges du minerai avec du SAP à des concentrations en polymère SAP variables. Généralement la concentration maximale sera en fond de cale. En pratique, le volume de minerai traité avec le SAP représente au plus 70% du volume de la cale.

Selon l'invention les polymères SAP sont des polymères réticulés dérivés de la polymérisation des monomères hydrosolubles suivants, sans limitation technique :
- Les monomères non ioniques avantageusement choisis dans le groupe comprenant l'acrylamide et ses dérivés, la N- vinylpyrrolidone, et l'Acryloyl morpholine.
- Les monomères anioniques avantageusement choisis dans le groupe comprenant l'acide (meth)acrylique, et leurs sels, l'acide 2-acrylamido- 2-méthylpropane sulfonique (ATBS) et ses sels.
- Les monomères cationiques comme le chlorure de diallyl dimethyl ammonium (DADMAC) et l'acrylate de dialkylaminoéthyle (ADAME) et le méthacrylate de dialkylaminoéthyle (MADAME), ainsi que leurs formes acidifiés ou quaternisés.

La demanderesse a mis en évidence que certains polymères permettaient d'améliorer la stabilité du minerai lors du transport.

Ces polymères sont des copolymères réticulés à base d'acrylamide et d'acide acrylique partiellement ou totalement neutralisé et également à base d'acide 2-acrylamido- 2-méthylpropane sulfonique (ATBS) partiellement ou totalement neutralisé et/ou de monomères à caractère hydrophobe comme par exemple des alkyl (meth)acrylates ethoxylés ou des alkyl (meth)acrylamide ethoxylés. L'ATBS représente généralement moins de 30% molaire par rapport à la totalité des monomères, et les monomères à caractère hydrophobes moins de 5% molaire.

Dans un mode préféré de réalisation, le SAP a une large granulométrie permettant de s'incorporer au minerai et avoir un effet retard lors du chargement. Par large granulométrie, on désigne deux populations de particules, respectivement une population de particules de SAP de taille inférieure à 1 mm et une population de particules de SAP de taille comprise entre 1 et 4 mm. La proportion des deux populations sera ajustée en fonction de la granulométrie du minerai.

La demanderesse a également mis en évidence que l'ajout d'un polymère hydrosoluble linéaire à base d'acrylamide dans le mélange de minerai et de SAP permet d'améliorer les performances de stabilité du minerai lors du transport. Ce polymère a de préférence un poids moléculaire supérieur à 10 millions de daltons et est avantageusement un copolymère à base d'acrylamide et d'acrylate de sodium. Dans ce cas, la quantité de ce polymère linéaire par rapport au SAP est généralement comprise entre 1 et 10 % poids.

D'autres composés comme la bentonite fluidisée ou le carbonate de calcium peuvent être ajoutés dans le mélange de minerai et de SAP.

En pratique le mélange du SAP, optionnellement du polymère linéaire et des autres composés, avec le minerai est effectué sur la bande transporteuse acheminant le minerai en vrac dans la cale du minéralier. Les produits sont déposés sur le minerai, les vibrations et brassages naturels assurant un mélange homogène

La quantité de polymère SAP mélangée au minerai est comprise entre 0.05 et 1% en poids. Elle variera en fonction de la hauteur de la cale que l'on charge du mélange, la partie inférieure contient avantageusement une quantité plus importante de SAP que la partie supérieure.

Les exemples suivants et les figures annexées permettront d'illustrer l'invention et les avantages qui en découlent.

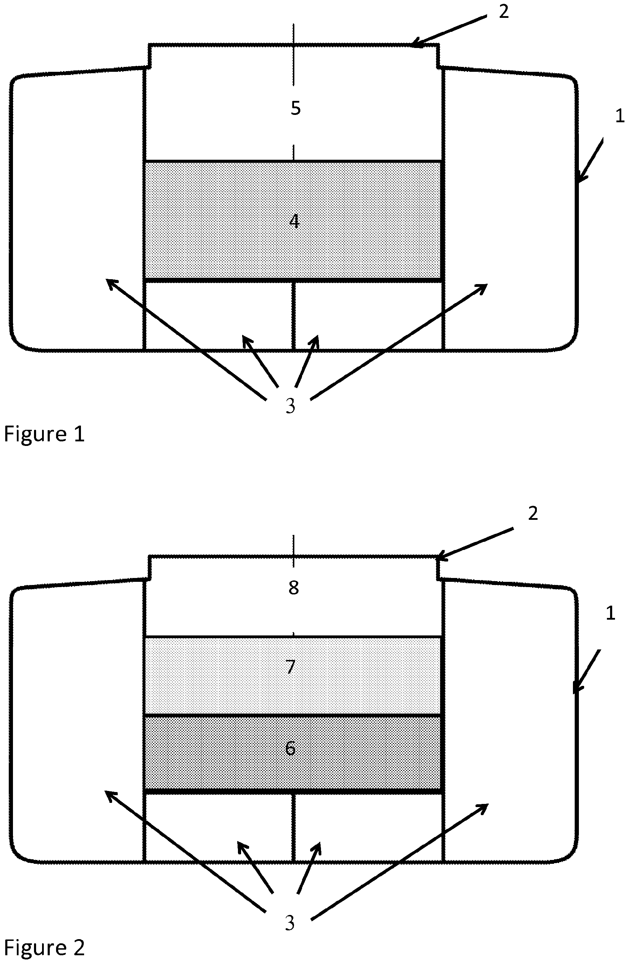

Les figures 1 et 2 représentent une coupe de la coque d'un minéralier. La coque (1) contient une cale (2) proprement dite entourée de part et d'autre de ballastes (3).
   La figure 1 représente un mode de réalisation de l'invention dans lequel on remplit la partie inférieure (50% vol) de la cale du minéralier avec un mélange du minerai et de SAP (4), la partie supérieure (5) étant remplie de minerai sans SAP.
La figure 2 représente un autre mode de réalisation de l'invention dans lequel on remplit la partie inférieure (un tiers du volume) de la cale du minéralier avec un mélange du minerai et de SAP de concentration 2x (6), la partie intermédiaire (un tiers du volume) avec un mélange du minerai et de SAP de concentration x (7), et la partie supérieure (8) (un tiers du volume) étant remplie de minerai sans SAP.

### Exemples

### Exemple 1- Art antérieur

Un minéralier de 120.000 tonnes est rempli d'un mélange de minerai de fer avec 0.2% en poids d'une poudre de polymère SAP d'un copolymère réticulé d'acrylamide et d'acrylate de sodium (ratio molaire en % 70/30). Lorsqu'à l'arrivée du navire, on prélève des grains gonflés de superabsorbant (SAP) dans la masse du minerai, on constate que le SAP du fond de cale est gonflé de 80 à 120 fois son poids (pour une absorption théorique de 300 fois) alors que sur la moitié supérieure, ce gonflement est de 10 à 30 fois seulement. Il y a donc une quantité importante de superabsorbant qui ne donne pas l'efficacité maximum.

D'autre part, un phénomène de « fluidisation » se produit sur le fond de cale où par migration de l'eau, le taux d'humidité peut monter à 10 ou 20%. Ces problèmes de « fluidisation », autrement dit de stabilité du minerai lors du transport sont à l'origine de potentiels incidents en mer.

Trois essais ont été effectués selon le procédé de l'invention.

### Exemple 2 - Polymère SAP uniquement dans la partie inférieure de la cale du minéralier.

On mélange le même superabsorbant (0.34% en poids) dans la moitié inférieure de la cale du bateau, le reste du chargement étant exempt de SAP. On a trouvé au bas un gonflement de 50 à 100 fois et au centre un gonflement supérieur à 50 fois. Il semble donc que cette concentration sur la partie inférieure du bateau permet de retenir l'eau par absorption d'une manière plus efficace avec une plus faible consommation. La consommation moyenne de polymère SAP est de 0.17% en poids. La réduction de consommation est 15% ce qui est considérable à l'échelle d'un minéralier et qui rend la technologie plus abordable.

### Exemple 3 - Répartition du SAP dans deux couches

On remplit la partie inférieure de la cale (le tiers du volume) d'une couche d'un mélange de minerai de fer et du même superabsorbant à une concentration de 0.3% en poids. On remplit ensuite la partie intermédiaire (le tiers du volume) d'une couche d'un mélange de minerai de fer et du même superabsorbant à une concentration de 0.15% en poids. Le reste de la cale est rempli avec le minerai seul. Au total, la concentration moyenne du chargement est de 0.15% en poids. Les résultats obtenus sont équivalents à ceux obtenus dans l'exemple 2 mais pour une consommation de SAP inférieure. La réduction de consommation est 25%.

### Exemple 4 - Polymère SAP amélioré combiné avec un polymère hydrosoluble linéaire

L'exemple 2 a été reproduit en utilisant un autre polymère SAP. On s'est aperçu que l'ajout au minerai de 0.26% en poids de polymère SAP, d'un copolymère réticulé d'acrylamide (69,95 mol%), d'acrylate de sodium (27 mol%), d'ATBS Na (3 mol%) et de de methacrylate de behenyl 25-ethoxylé (0.05 mol%), avec un polyacrylamide hydrosoluble acrylamide - acrylate de Na (70/30 mol%) de poids moléculaire 18 millions, diminue encore fortement la vitesse de migration et permet d'homogénéiser l'absorption sur la hauteur de chargement ou le SAP est introduit. Dans ce cas, la quantité du polymère linéaire par rapport au SAP est de 5 % poids. La consommation moyenne de polymère SAP est de 0.13% en poids, celle de polymère linéaire est de 0.0065% en poids, ce qui fait une consommation totale en polymère de 0.1365% en poids. La réduction de consommation est de 32%.

Ces chiffres sont des moyennes et il est extrêmement difficile de faire une analyse précise sur des masses de 100 à 150 000 tonnes avec des taux d'humidité variant pour un même chargement de 7 à 9%. De plus, le procédé est particulièrement valable durant les périodes de pluies dans les pays tropicaux où le minerai est à la fois mouillé par la pluie lorsqu'il est en tas et lorsqu'il est chargé.

Il est aussi très difficile de prendre le risque pour un capitaine de minéralier d'accepter un chargement qui n'est pas assuré de ne pas passer en « fluidisation ».
La TML (Transport Moisture Limit) est la limite d'humidité du minerai au-delà de laquelle le minerai va se liquéfier, entrainant de possibles risques pour la stabilité des minéraliers.
La détermination de cette TML est donnée en détails dans l'APPENDIX 2 de l'IMSBC code (INTERNATIONAL MARITIME SOLID BULK CARGOES), intitulé : « LABORATORY TEST PROCEDURES, ASSOCIATED APPARATUS AND STANDARDS ».

La détermination de la TML débouche sur la délivrance d'un certificat qui fait loi devant le transport en minéralier. L'entreprise qui envoie le minerai doit montrer, au capitaine du navire et aux instances maritimes, que l'humidité du minerai qu'elle veut embarquer est, au moment du chargement, inférieure à la TML calculée et certifiée.

Des tests laboratoire, effectués selon la norme de l'international Maritime Organization (IMO) du «Solid Bulk Cargoes Code, norme des transports de solides en vrac, permettent de se rendre compte de l'efficacité du polymère au bout de 20 ou 40 jours.

Pour cela, 15 kg de minerai de fer sont mélangés avec du polymère SAP et éventuellement un polymère linéaire. De l'eau est ajoutée jusqu'à ce que l'humidité du mélange soit ajustée à la TML. Le mélange ainsi obtenu est placé dans un réceptacle lui-même positionné sur une table vibrante. Le réceptacle est fermé hermétiquement, afin de ne pas avoir de perte d'humidité et donc de séchage du minerai, un poids de 7 kg est disposé dessus. Pendant 20 ou 40 jours, la table va vibrer pendant 15 minutes toutes les heures afin de simuler les chocs dans les cales des vraquiers.
Tous les 3 à 4 jours, le couvercle est enlevé et un test de pénétration est effectué afin de contrôler l'état du minerai (liquéfaction) avec le même protocole que les tests effectués pour déterminer la TML.

L'utilisation des polymères SAP comprenant de l'AMPS, ainsi que les mélanges de polymères SAP avec un polymère linéaire permettent une absorption de l'humidité plus rapide. La vitesse d'absorption est augmentée de 20 à 100%. Ils permettent d'augmenter la TML de 3 à 5%, ce qui est considérable et permet une plus grande latitude de chargement du minéralier. Il n'y a pas d'eau résiduelle lors du chargement. On peut charger le navire en pile et non en couches planes, ce qui fait gagner un temps précieux à l'armateur du minéralier. En effet, le chargement en couche nécessite l'intervention d'un chargeur, qu'il faut descendre et remonter de la cale.

Il a été prouvé qu'on peut réduire de 30% et probablement 50% la charge en superabsorbant et donc réduire les coûts et la quantité pour un bateau d'environ 30 tonnes de SAP. Cela rend d'autant plus abordable cette technologie pour les transporteurs de minerais.

Evidemment l'homme de l'art sera capable de modifier le procédé par exemple en mettant des charges dégressive de SAP en cours de chargement, en augmentant fortement le SAP sur la couche inférieure, en incorporant un SAP modifié par exemple par une charge de bentonite donnant plus de rigidité, un amidon ou de l'urée donnant une vitesse d'absorption plus grande. Le but recherché étant toujours de bloquer suffisamment d'eau pour éviter la « fluidification » de la charge.

## Revendications

1. Procédé de chargement de la cale d'un minéralier d'un minerai en vrac selon lequel on charge la cale avec, successivement, une partie du minerai traitée avec un polymère superabsorbant (SAP) et une partie du minerai non traitée avec un polymère superabsorbant (SAP).

2. Procédé selon la revendication 1, **caractérisé en ce que** la partie du minerai traitée avec un polymère superabsorbant (SAP) constitue une couche inférieure répartie sur toute la surface du fond de la cale et la partie non traitée du minerai constitue un couche supérieure, avantageusement répartie sur toute la surface de la couche inférieure.

3. Procédé selon la revendication 1 **caractérisé en ce qu'**on traite le minerai avec des concentrations de SAP variables

4. Procédé selon la revendication 1 **caractérisé en ce que** le volume de minerai traité avec le SAP représente au plus 70% du volume de la cale.

5. Procédé selon la revendication 1 **caractérisé en ce que** les polymères SAP sont des copolymères réticulés à base d'acrylamide et d'acide acrylique partiellement ou totalement neutralisé et également à base d'acide 2-acrylamido- 2-méthylpropane sulfonique (ATBS) partiellement ou totalement neutralisé et/ou de monomères à caractère hydrophobe choisis dans le groupe comprenant les alkyl (meth)acrylates ethoxylés ou les alkyl (meth)acrylamide ethoxylés.

6. Procédé selon la revendication 1 **caractérisé en ce que** le polymère SAP contient une population de particules de taille inférieures à 1 mm et une population de particules de taille comprise entre 1 et 4 mm.

7. Procédé selon la revendication 1 **caractérisé en ce que** la quantité de polymère SAP mélangée au minerai est comprise entre 0.05 et 1% en poids

8. Procédé selon la revendication 1 **caractérisé en ce qu'**on traite le minerai avec un polymère SAP et un polymère hydrosoluble linéaire à base d'acrylamide

9. Procédé selon la revendication 8 **caractérisé en ce que** le polymère hydrosoluble linéaire a un poids moléculaire supérieur à 10 millions de daltons.

10. Procédé selon les revendications 8 et 9 **caractérisé en ce que** la quantité de polymère linéaire par rapport au SAP est comprise entre 1 et 10 en % poids.

## Patentansprüche

1. Verfahren zum Beladen des Laderaums eines Erzfrachters mit losem Erz, wobei der Laderaum nacheinander mit einem Teil des mit einem superabsorbierenden Polymer (SAP) behandelten und mit einem Teil des nicht mit einem superabsorbierenden Polymer (SAP) behandelten Erzes beladen wird.

2. Verfahren nach Anspruch 1, **dadurch gekennzeichnet, dass** der Teil des mit einem superabsorbierenden Polymer (SAP) behandelten Erzes eine untere Schicht bildet, die über die gesamte Oberfläche des Bodens des Laderaums verteilt ist, und der nicht behandelte Teil des Erzes eine oberes Schicht bildet, die vorteilhafterweise über die gesamte Oberfläche der unteren Schicht verteilt ist.

3. Verfahren nach Anspruch 1, **dadurch gekennzeichnet, dass** das Erz mit variablen SAP-Konzentrationen behandelt wird.

4. Verfahren nach Anspruch 1, **dadurch gekennzeichnet, dass** das Volumen von mit dem SAP behandeltem Erz höchstens 70 % des Volumens des Laderaums darstellt.

5. Verfahren nach Anspruch 1, **dadurch gekennzeichnet, dass** die SAP-Polymere vernetzte Copolymere auf Basis von Acrylamid und teilweise oder vollständig neutralisierter Acrylsäure und ebenfalls auf Basis von teilweise oder vollständig neutralisierter 2-Acrylamido- 2-methylpropansulfonsäure (ATBS) und/oder von Monomeren mit hydrophobem Charakter, ausgewählt aus der Gruppe, umfassend ethoxylierte Alkyl(meth)acrylate oder ethoxylierte Alkyl(meth)acrylamide, sind.

6. Verfahren nach Anspruch 1, **dadurch gekennzeichnet, dass** das SAP-Polymer eine Population von Teilchen einer Größe unter 1 mm und eine Population von Teilchen einer Größe zwischen 1 und 4 mm enthält.

7. Verfahren nach Anspruch 1, **dadurch gekennzeichnet, dass** die dem Erz zugemischte Menge an SAP-Polymer zwischen 0,05 und 1 Gew.-% beträgt.

8. Verfahren nach Anspruch 1, **dadurch gekennzeichnet, dass** das Erz mit einem SAP-Polymer und einem linearen wasserlöslichen Polymer auf Basis von Acrylamid behandelt wird.

9. Verfahren nach Anspruch 8, **dadurch gekennzeichnet, dass** das lineare wasserlösliche Polymer ein Molekulargewicht von über 10 Millionen Dalton aufweist.

10. Verfahren nach den Ansprüchen 8 und 9, **dadurch gekennzeichnet, dass** die Menge an linearem Polymer bezüglich SAP zwischen 1 und 10 Gew.-% beträgt.

## Claims

1. Process of loading the hold of an ore carrier with loose ore in which the hold is loaded in succession with part of the ore treated with a superabsorbent polymer (SAP) and part of the ore not treated with a superabsorbent polymer (SAP).

2. Process according to claim 1, **characterized in that** the part of the ore treated with a superabsorbent polymer (SAP) forms a lower layer spread out over the entire bottom of the hold and the untreated part of the ore forms an upper layer, advantageously spread out over the entire surface of the lower layer.

3. Process according to claim 1 **characterized in that** the ore is treated with variable concentrations of SAP.

4. Process according to claim 1, **characterized in that** the volume of ore treated with the SAP represents at the most 70% of the volume in the hold.

5. Process according to claim 1 **characterized in that** the SAP polymers are reticulated copolymers based on acrylamide and acrylic acid, partially or totally neutralized and also based on 2-acrylamido- 2-methylpropane sulfonic acid (ATBS) partially or totally neutralized and/or monomers of a hydrophobic nature chosen from the group comprising ethoxylated alkyl (meth)acrylates or ethoxylated alkyl (meth)acrylamides.

6. Process according to claim 1 **characterized in that** the SAP polymer contains a population of particles having a size smaller than 1 mm and a population of particles with size included between 1 and 4 mm.

7. Process according to claim 1 **characterized in that** the quantity of SAP polymer mixed into the ore is included between 0.05 and 1% by weight.

8. Process according to claim 1 **characterized in that** the ore is treated with an SAP polymer and a linear hydrosoluble polymer based on acrylamide.

9. Process according to claim 8 **characterized in that** the linear hydrosoluble polymer has a molecular weight greater than 10 million daltons.

10. Process according to claims 8 and 9 **characterised in that** the quantity of linear polymer compared to the SAP is included between 1 and 10% by weight.
